# EUROPÄISCHE PATENTSCHRIFT

(11) **EP 1 180 447 B1**
(45) Veröffentlichungstag und Bekanntmachung des Hinweises auf die Patenterteilung: **27.04.2005**
(21) Anmeldenummer: 01118477.7
(22) Anmeldetag: 01.08.2001
(51) Int. Cl.: B60N 2/22

(54) **Einrichtung zur Neigungsverstellung einer Rückenlehne**
Arrangement for adjusting the inclination of a backrest
Disposition pour le réglage de l'inclinaison d'un dossier

(30) Priorität: 10.08.2000 DE 10039042
(43) Veröffentlichungstag der Anmeldung: 20.02.2002
(73) Patentinhaber: GRAMMER AG, 92224 Amberg (DE)
(72) Erfinder: Haller, Nikolaus, 92260 Ammerthal (DE)
(74) Vertreter: LOUIS- PÖHLAU- LOHRENTZ

(56) Entgegenhaltungen:
- EP-A- 0 425 237
- DE-A- 4 441 159
- DE-B- 1 289 268
- DE-B- 2 660 395
- DE-U- 6 908 021
- US-A- 2 660 226
- US-A- 3 328 079

## Beschreibung

Die Erfindung betrifft eine Einrichtung zur Neigungsverstellung einer Rückenlehne in Bezug auf eine Sitzplatte eines Sitzes, insbesondere eines Fahrzeugsitzes (siehe z.B. US-A-2 660 226, dem Oberbegriff entsprechend).

Zur Neigungsverstellung der Rückenlehne eines Fahrzeugsitzes sind Einrichtungen mit einem Drehknopf bekannt. Wird der Drehknopf in die eine oder in die andere Drehrichtung gedreht, so wird mittels eines mit dem Drehgriff verbundenen Getriebes die Rückenlehne in ihrer Neigung wunschgemäß verstellt. Mit solchen bekannten Verstelleinrichtungen ist zwar eine präzise Neigungs-Verstellung der Rückenlehne möglich, das Drehen des Drehgriffes ist jedoch zeitaufwendig.

Des weiteren sind Verstelleinrichtungen zur Neigungs-Verstellung der Rückenlehne eines Fahrzeugsitzes in Bezug auf seine Sitzplatte bekannt, die ein erstes Element mit einer Zahnung und die ein Gegenelement mit einer Gegenzahnung aufweisen, wobei die Zahnung des ersten Elementes in der normalen Arretierstellung in die Gegenzahnung des sitzfest vorgesehenen Gegenelementes eingreift. Zur Verstellung der Neigung der Rückenlehne ist es bei diesen bekannten Verstelleinrichtungen erforderlich, das besagte erste Element in radialer Richtung aus der Gegenzahnung des sitzfesten Gegenelementes herauszubewegen. Bei diesen bekannten Verstelleinrichtungen sind Klappergeräusche insbesondere nach einer längeren Lebensdauer der Einrichtung oftmals nicht vermeidbar.

Der Erfindung liegt die Aufgabe zugrunde, eine Einrichtung der eingangs genannten Art zu schaffen, die einfach ausgebildet auch nach einer langen Lebensdauer sehr zuverlässig funktioniert.

Diese Aufgabe wird bei einer Einrichtung der eingangs genannten Art erfindungsgemäß durch die Merkmalskombination des Anspruchs 1 bzw. 2 gelöst.

Weitere Merkmale der Erfindung sind in den abhängigen Ansprüchen angegeben.

Bei der erfindungsgemäßen Einrichtung wird also nicht ein erstes Element mit seiner Zahnung in radialer Richtung aus der Gegenzahnung des sitzfesten Gegenelementes ausgerastet, um die Rückenlehne in Bezug auf die Sitzplatte wunschgemäß verstellen zu können, sondern es wird das Federblech mit Hilfe der Betätigungseinrichtung aus der Gegenzahnung des sitzfesten Gegenelementes seitlich, d.h. zahnaxial ausgerastet. Wird die Betätigungseinrichtung wieder losgelassen, so federt das Federelement automatisch zurück, wobei seine Zahnung mit der Gegenzahnung des Gegehelementes verrastet wird.

Zweckmäßigerweise sind das Gegenelement, das Federblech und die dem Federblech zugeordnete Betätigungseinrichtung an einem Sitzbeschlag angebracht. Mittels des Sitzbeschlages ist die Rückenlehne mit der Sitzplatte in an sich bekannter Weise verschwenkbar verbunden.

Bei der erfindungsgemäßen Einrichtung kann das Federblech mit einem Befestigungsabschnitt am Sitzbeschlag befestigt sein. Das sitzfeste Gegenelement kann am Sitzbeschlag befestigt oder ein integrales Bestandteil desselben sein.

Die Betätigungseinrichtung der erfindungsgemäßen Einrichtung kann eine am Sitzbeschlag gelagerte Achse mit einem am Federblech anliegenden Verstellnocken aufweisen. Ein anderes Merkmal der Erfindung besteht darin, daß die Betätigungseinrichtung einen Schwenkhebel mit Preßelementen und daß das Federblech mit Keilrippen versehen ist , wobei die Preßelemente und die Keilrippen entlang deckungsgleichen Teilkreisen vorgesehen sind. Noch eine andere Alternative ist erfindungsgemäß dadurch gekennzeichnet, daß das Federblech einen Keil und daß die Betätigungseinrichtung einen Schiebehebel mit einem Preßelement aufweist, der entlang des Keiles verschiebbar ist.

Bei der erfindungsgemäßen Verstelleinrichtung schließen die Zahnung und die Gegenzahnung mit der gemeinsamen Zahnungs-Achse einen spitzen Winkel ein. Dieser spitze Winkel kann beispielsweise größenordnungsmäßig 5 bis 10 Winkelgrad betragen. Selbstverständlich kann der besagte spitze Winkel auch kleiner oder größer sein.

Durch eine solche Ausbildung der zuletzt genannten Art, ergibt sich der wesentliche Vorteil, daß bei einer Abnutzung der Zähne der Zahnung und/oder der Gegenzahnung, wie sie nach einer langen Lebensdauer oftmals nicht vermeidbar ist, eine automatische Nachstellung der Zahnungen in Bezug zueinander erzielt wird.

Als vorteilhaft hat es sich erwiesen, wenn die Zahnung in Federblech-Öffnungsrichtung spitzwinkelig derartig erweitert ist, daß sich in der Raststellung eine Selbsthemmung ergibt. Auf diese Weise wird eine optimale Betriebszuverlässigkeit erreicht.

Um einen optimaleren Eingriff der Zahnung des Federbleches in die Gegenzahnung des sitzfesten Gegenelementes zu erreichen, ist es erfindungsgemäß vorgesehen, daß die Zahnung und die Gegenzahnung im Übergang zwischen ihren in der Freigabestellung einander zugewandten Zahnflanken und den Zahnköpfen abgerundet sind.

Weitere Einzelheiten, Merkmale und Vorteile ergeben sich aus der nachfolgenden Beschreibung von in der Zeichnung schematisch verdeutlichten Ausführungsbeispielen der erfindungsgemäßen Verstell-Einrichtung zur Neigungsverstellung einer Rückenlehne in Bezug auf eine Sitzplatte eines Sitzes, insbesondere eines Fahrzeugsitzes. Es zeigen:
- Figur 1: eine Seitenansicht eines schematisch dargestellten Fahrzeugsitzes,
- Figur 2: abschnittweise in einer Schnittdarstellung eine erste Ausbildung der Verstelleinrichtung,
- Figur 3: in einer der Figur 2 ähnlichen Schnittdarstellung abschnittweise eine zweite Ausbildung der Verstell-Einrichtung,
- Figur 4: eine Ansicht des Federbleches und des Gegenelementes, die abschnittweise gezeichnet sind, in Blickrichtung der Pfeile IV-IV in Figur 3, wobei der Schwenkhebel der Verstelleinrichtung mit dünnen doppelt strichpunktierten Linien angedeutet ist,
- Figur 5: eine den Figuren 2 und 3 ähnliche Schnittdarstellung einer dritten, abschnittweise gezeichneten Ausbildung der Verstell-Einrichtung mit einem Schiebehebel,
- Figur 6: in einem vergrößerten Maßstab das Detail VI in Figur 2 - in der Freigabestellung des Federbleches -, und
- Figur 7: eine der Figur 6 ähnliche Darstellung, wobei das Federblech jedoch die Raststellung einnimmt.

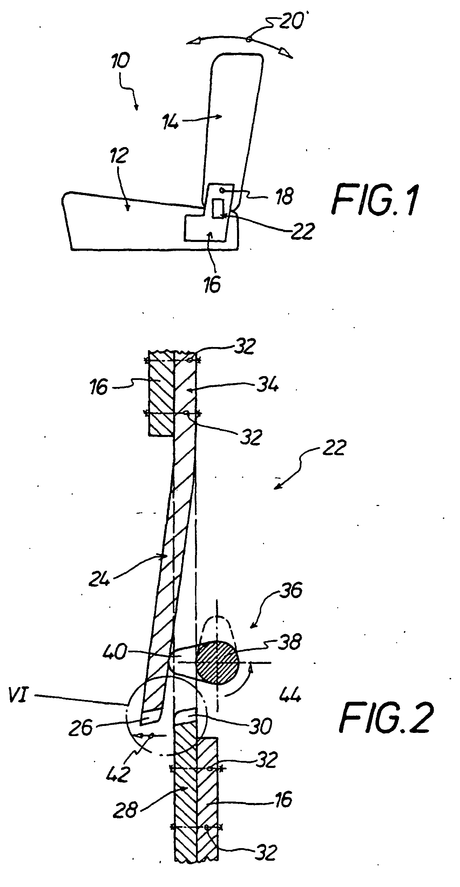

Figur 1 zeigt in einer Seitenansicht schematisch einen Fahrzeugsitz 10 mit einer Sitzplatte 12 und einer Rückenlehne 14, die miteinander mittels seitlichen Beschlägen 16 verbunden sind. Die Rückenlehne 14 ist um eine Schwenkachse 18 in ihrer Neigung in Bezug auf die Sitzplatte 12 verstellbar. Das ist durch den bogenförmigen Doppelpfeil 20 angedeutet. Zur Neigungsverstellung der Rückenlehne 14 dient eine Verstell-Einrichtung 22.

Figur 2 zeigt abschnittweise in einer Schnittdarstellung eine Ausbildung der Verstelleinrichtung 22 bzw. wesentlicher Teile derselben. Die Verstelleinrichtung 22 weist ein Federblech 24 mit einer Zahnung 26 und ein sitzfestes Gegenelement 28 mit einer der Zahnung 26 entsprechenden Gegenzahnung 30 auf. Bei dem in der Figur 2 verdeutlichten Ausführungsbeispiel der Verstelleinrichtung 22 ist das Gegenelement 28 an dem abschnittweise verdeutlichten Beschlag 16 befestigt. Diese Befestigung ist durch die dünnen strichpunktierten Linien 32 angedeutet. Das Federblech 24 weist einen Befestigungsabschnitt 34 auf, mit dem es an einem zugehörigen Abschnitt des Beschlages 16 befestigt ist. Diese Befestigung ist ebenfalls durch dünne strichpunktierte Linien 32 verdeutlicht.

Dem Federblech 24 ist eine Betätigungseinrichtung 36 zugeordnet, die eine am Sitzbeschlag 16 gelagerte Achse 38 mit einem am Federblech 24 anliegenden Verstellnocken 40 aufweist.

Mit einer dünnen strichlierten Linie ist der Verstellnocken 40 in der Raststellung und mit einer durchgezogenen Linie in der Freigabestellung der Betätigungseinrichtung 36 gezeichnet. Entsprechend ist das Federblech 24 mit dünnen strichlierten Linien in der Raststellung und mit durchgezogenen Linien in der Freigabestellung gezeichnet. In der Raststellung ist die Zahnung 26 des Federbleches 24 mit der Gegenzahnung 30 des sitzfesten Gegenelementes 28 verrastet. In der Freigabestellung ist die Zahnung 26 des Federelementes 24 aus der Gegenzahnung 30 des Gegenelementes 28 seitlich, zahnaxial ausgerastet. Diese seitliche, zahnaxiale Ausrastung bzw. Ausrastbewegung ist in Figur 2 durch den Pfeil 42 verdeutlicht, der zur Gegenzahnung 30 des Gegenelementes 28 und somit zur Zahnung 26 des Federelementes 24 parallel orientiert ist.

Wird die Betätigungseinrichtung 36 von der Raststellung in die Freigabestellung verstellt, was durch den bogenförmigen Pfeil 44 angedeutet ist, so wird das Federblech 24 in Richtung des Pfeiles 42 seitlich, zahnaxial ausgelenkt. Gleichzeitig wird das Federblech 24 mechanisch gespannt. Wird die Betätigungseinrichtung 36 wieder losgelassen, so entspannt sich das Federblech 24, wobei seine Zahnung 26 wieder in die Gegenzahnung 30 des sitzfesten Gegenelementes 28 einrastet.

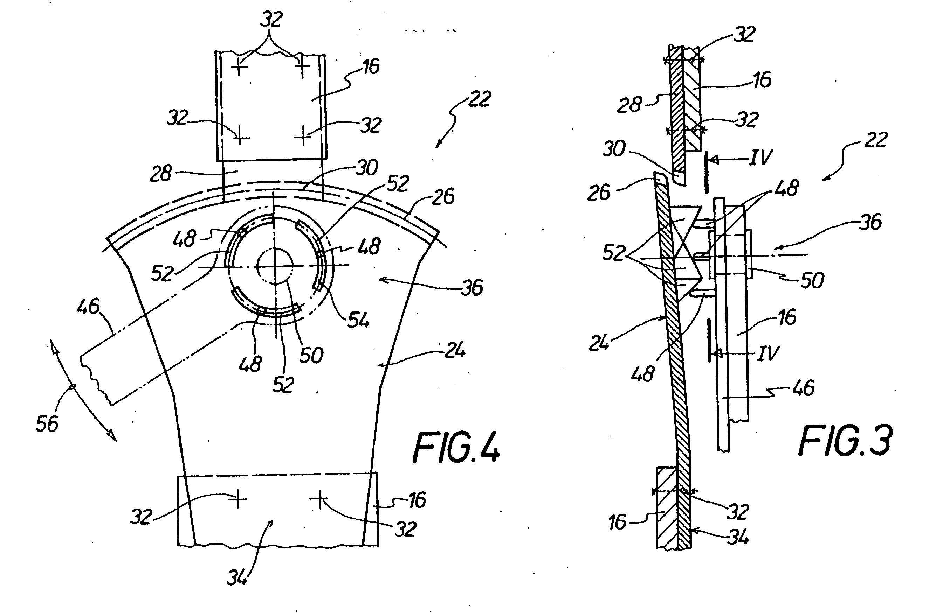

Die Figuren 3 und 4 verdeutlichen eine andere Ausbildung der Verstelleinrichtung 22, bei welcher die Betätigungseinrichtung 36 einen Schwenkhebel 46 aufweist, von dem Preßelemente 48 wegstehen. Der Schwenkhebel 46 ist mittels eines Achsstummels 50 am Beschlag 16 verschwenkbar gelagert. Das Federblech 24 ist an seiner dem Schwenkhebel 46 zugewandten Seite mit Keilrippen 52 versehen. Die Preßelemente 48 und die Keilrippen 52 sind entlang deckungsgleichen Teilkreisen 54 (sh. Figur 4) in gleicher Anzahl voneinander äquidistant beabstandet angeordnet.

Wird der Schwenkhebel 46 um seinen zentralen Achsstummel 50 verschwenkt, was in Figur 4 durch den bogenförmigen Pfeil 56 angedeutet ist, so bewegen sich die Preßelemente 48 des achsfest vorgesehenen Schwenkhebels 46 an den Keilrippen 52 entlang. Hierdurch wird das mit seinem Befestigungsabschnitt 34 am Beschlag 16 befestigte Federblech 24 entweder seitlich zahnaxial vom sitzfest vorgesehenen Gegenelement 28 wegbewegt, um die Zahnung 26 des Federbleches 24 aus der Gegenzahnung 30 des Gegenelementes 28 freizugeben, oder das Federelement 24 entspannt sich wieder, so daß die Zahnung 26 des Federbleches 24 wieder in die Gegenzahnung 30 des Gegenelementes 28 eingreift und die Zahnung 26 mit der Gegenzahnung 30 verrastet wird.

Gleiche Einzelheiten sind in den Figuren 3 und 4 mit denselben Bezugsziffern wie in Figur 2 bezeichnet, so daß es sich erübrigt, in Verbindung mit den Figuren 3 und 4 alle diese Einzelheiten noch einmal detailliert zu beschreiben.

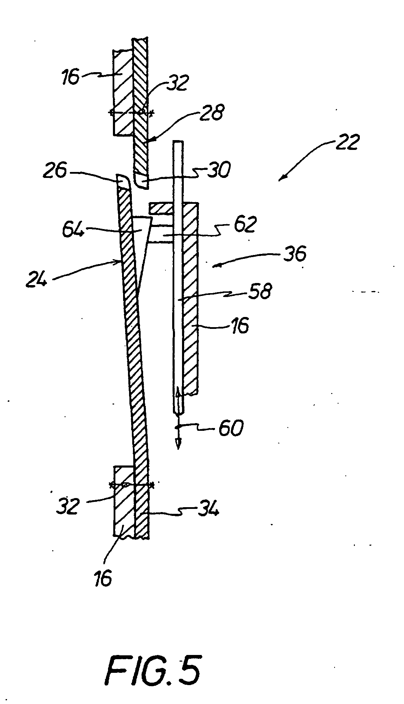

Figur 5 verdeutlicht eine dritte Ausführungsform der Verstelleinrichtung 22, bei der die Betätigungseinrichtung 36 einen Schiebehebel 58 aufweist, der am Beschlag 16 linear beweglich geführt vorgesehen ist. Diese lineare Beweglichkeit ist durch den Pfeil 60 angedeutet. Der Schiebehebel 58 ist mit einem Preßelement 62 ausgebildet, das entlang eines am Federblech 24 vorgesehenen Keiles 64 verschiebbar ist, um das Federblech 24 mit seiner Zahnung 26 aus der Gegenzahnung 30 des Gegenelementes 28 zahnaxial freizugeben oder die Zahnung 26 durch mechanische Entspannung des Federbleches 24 wieder mit der Gegenzahnung 30 des Gegenelementes 28 spielfrei zu verrasten.

Gleiche Einzelheiten sind in Figur 5 mit denselben Bezugsziffem wie in den Figuren 2 bis 4 bezeichnet, so daß es sich erübrigt, in Verbindung mit Figur 5 alle Einzelheiten noch einmal detalliert zu beschreiben.

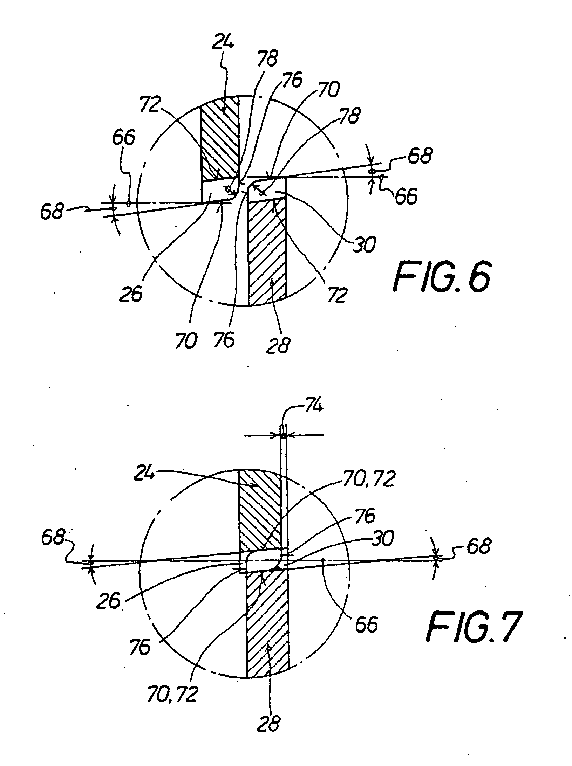

Figur 6 zeigt in einem vergrößerten Maßstab einen Abschnitt des Gegenelementes 28 sowie eine Abschnitt des Federbleches 24 in der Freigabestellung, in der das Federblech 24 in Bezug auf das sitzfeste Gegenelement 28 seitlich, zahnaxial verstellt ist. Die Zahnung 26 des Federelementes 24 und die Gegenzahnung 30 des sitzfesten Gegenelementes 28 schließen mit der gemeinsamen Zahnungs-Achse, die in Figur 7 durch die dünne strichpunktierte Linie 66 verdeutlicht ist bzw. die in Figur 6 durch jeweils eine dem Federblech 24 und eine dem Gegenelement 28 zugeordnete dünne strichpunktierte Linie 66 angedeutet ist, einen spitzen Winkel 68 ein. Dabei sind die Zähne der Zahnung 26 und die Zähne der Gegenzahnung 30 derartig ausgebildet, daß die Zahnköpfe 70 und die Zahnfüße 72 zueinander jeweils parallel sind.

Figur 7 verdeutlicht, daß die Zahnung 26 des Federbleches 24 und die Zahnung 30 des sitzfesten Gegenelementes 28 durchmessermäßig derartig dimensioniert sind, daß das Federelement 24 im ungebrauchten Originalzustand gegen das sitzfeste Gegenelement 28, seitlich zahnaxial um ein definiertes Maß 74 versetzt ist. Hierdurch wird ein automatisches Nachstellen des Federbleches 24 relativ zum Gegenelement 28 bei Abnutzungen nach einer langen Lebensdauer bewirkt.

Die Zahnung 26 des Federbleches 24 und die Gegenzahnung 30 des sitzfesten Gegenelementes 28 sind im Übergang zwischen ihren in der Freigabestellung einander zugewandten Zahnflanken 76 und den Zahnköpfen 70 abgerundet (sh. Figur 6). Diese Abrundungen sind durch die Pfeile 78 angedeutet.

## Patentansprüche

1. Einrichtung zur Neigungsverstellung einer Rückenlehne (14) in Bezug auf eine Sitzplatte (12) eines Sitzes, insbesondere eines Fahrzeugsitzes (10), wobei an der Rückenlehne (14) oder an der Sitzplatte (12) ein mit einer Zahnung (26) ausgebildetes Federblech (24) und an der Sitzplatte (12) oder an der Rückenlehne (14) ein mit einer Gegenzahnung (30) ausgebildetes sitzfestes Gegenelement (28) angebracht ist, die Zahnung (26) des Federbleches (24) in der normalen Arretierstellung in die Gegenzahnung (30) des Gegenelementes (28) spielfrei eingreift, und dem Federblech (24) eine zwischen einer Raststellung und einer Freigabestellung verstellbare Betätigungseinrichtung (36) zugeordnet ist, mit der die Zahnung (26) des Federbleches (24) in der Freigabestellung aus der Gegenzahnung (30) des Gegenelementes (28) seitlich, zahnaxial ausrastbar ist,
**dadurch gekennzeichnet,**
**daß** die Betätigungseinrichtung (36) einen Schwenkhebel (46) mit Preßelementen (48) und das Federblech (24) Keilrippen (52) aufweist, wobei die Preßelemente (48) und die Keilrippen (52) entlang deckungsgleichen Teilkreisen (54) vorgesehen sind, daß die Zahnung (26) und die Gegenzahnung (30) mit der gemeinsamen Zahnungsachse (66) einen spitzen Winkel (68) einschließen, und daß die Zahnung (26) und die Gegenzahnung (30) im Übergang zwischen ihren in der Freigabestellung einander zugewandten Zahnflanken (76) und den Zahnköpfen (70) abgerundet (78) sind.

2. Einrichtung nach dem Oberbegriff des Anspruches 1,
**dadurch gekennzeichnet,**
**daß** das Federblech (24) einen Keil (64) und daß die Betätigungseinrichtung (36) einen Schiebehebel (58) mit einem Preßelement (62) aufweist, der entlang des Keiles (64) verschiebbar ist, daß die Zahnung (26) und die Gegenzahnung (30) mit der gemeinsamen Zahnungsachse (66) einen spitzen Winkel (68) einschließen, und daß die Zahnung (26) und die Gegenzahnung (30) im Übergang zwischen ihren in der Freigabestellung einander zugewandten Zahnflanken (76) und den Zahnköpfen (70) abgerundet (78) sind.

3. Einrichtung nach Anspruch 1 oder 2,
**dadurch gekennzeichnet,**
**daß** das Gegenelement (28), das Federblech (24) und die dem Federblech (24) zugeordnete Betätigungseinrichtung (36) an einem Sitzbeschlag (16) angebracht sind.

4. Einrichtung nach Anspruch 3,
**dadurch gekennzeichnet,**
**daß** das Federblech (24) mit einem Befestigungsabschnitt (34) am Sitzbeschlag (16) befestigt ist.

5. Einrichtung nach Anspruch 3,
**dadurch gekennzeichnet,**
**daß** das Gegenelement (28) am Sitzbeschlag (16) befestigt oder ein integrales Bestandteil desselben ist.

6. Einrichtung nach Anspruch 1,
**dadurch gekennzeichnet,**
**daß** der spitze Winkel (68) in Federblech-Öffnungsrichtung (42) derartig erweitert ist, daß sich in der Raststellung eine Selbsthemmung ergibt.

## Claims

1. Device for adjusting the inclination of a backrest (14) with respect to a seat panel (12) of a seat, in particular a vehicle seat (10), a spring plate (24), which is formed with a toothing (26), being attached to the backrest (14) or to the seat panel (12), and a mating element (28), which is formed with a mating toothing (30) and is fixed on the seat, being attached to the seat panel (12) or to the backrest (14), the toothing (26) of the spring plate (24), in the normal locking position, engaging in a manner free from play in the mating toothing (30) of the mating element (28), and the spring plate (24) being assigned an actuating device (36) which can be adjusted between a latching position and a release position and with which the toothing (26) of the spring plate (24), in the release position, can be disengaged from the mating toothing (30) of the mating element (28) laterally, i.e. axially in terms of the teeth, **characterized in that** the actuating device (36) has a pivot lever (46) with pressing elements (48) and the spring plate (24) has wedge-type ribs (52), the pressing elements (48) and the wedge-type ribs (52) being provided along congruent reference circles (54), **in that** the toothing (26) and the mating toothing (30) enclose an acute angle (68) with the common toothing axis (66), and **in that** the toothing (26) and the mating toothing (30) are rounded (78) in the transition between their tooth flanks (76), which face one another in the release position, and the tooth tips (70).

2. Device according to the precharacterizing clause of Claim 1, **characterized in that** the spring plate (24) has a wedge (64), and **in that** the actuating device (36) has a sliding lever (58) with a pressing element (62), which lever can be displaced along the wedge (64), **in that** the toothing (26) and the mating toothing (30) enclose an acute angle (68) with the common toothing axis (66), and **in that** the toothing (26) and the mating toothing (30) are rounded (78) in the transition between their tooth flanks (76), which face one another in the release position, and the tooth tips (70).

3. Device according to Claim 1 or 2, **characterized in that** the mating element (28), the spring plate (24) and the actuating device (36), which is assigned to the spring plate (24), are attached to a seat fitting (16).

4. Device according to Claim 3, **characterized in that** the spring plate (24) is fastened to the seat fitting (16) with a fastening section (34).

5. Device according to Claim 3, **characterized in that** the mating element (28) is fastened to the seat fitting (16) or is an integral part of the same.

6. Device according to Claim 1, **characterized in that** the acute angle (68) is widened in the opening direction (42) of the spring plate in such a manner that self-locking arises in the latching position.

## Revendications

1. Système pour le réglage de l'inclinaison du dossier (14) d'un siège, en particulier d'un siège pour véhicule (10) par rapport à une plaque d'assise (12), du type dans lequel, au dossier (14) ou à la plaque d'assise (12), est associée une tôle élastique (24) comportant une denture ((26), et, à la plaque d'assise (12) ou au dossier (14), est associé un contre-élément (28), solidaire du siège et comportant une contre-denture (30), la denture (26) de la tôle élastique (24) engrènant sans jeu avec la contre-denture (30) du contre-élément (28) dans la position normale d'arrêt, et, à la tôle élastique (24) est associé un système d'actionnement (36) réglable entre une position de repos et une position de dégagement, système avec lequel la denture (26) de la tôle élastique (24) peut, en position de dégagement, être extraite latéralement hors de la direction axiale des dents de la contre-denture (30) du contre-élément (28), **caractérisé en ce que** le système d'actionnement (36) comprend un levier pivotant (46) présentant des éléments de compression (48), et la tôle élastique (24) porte des nervures de coincement (52), les éléments de compression (48) et les nervures de coincement (52) étant prévus sur leur longueur avec des portions circulaires semblables (54), **en ce que** la denture (26) et la contre-denture (30) font, par rapport à l'axe commun des dentures (66) un angle aigu (68), et **en ce que** la denture (26) et la contre-denture (30) sont arrondies (78) dans la zone de passage entre les flancs de dents se faisant face mutuellement (76) dans la position de dégagement et les têtes de dents (70).

2. Système selon le préambule de la revendication 1, **caractérisé en ce que** la tôle élastique (24) présente un coin (64) et **en ce que** le système d'actionnement (36) comprend un levier coulissant (58) comportant un élément de compression (62), qui peut se déplacer le long du coin (64), **en ce que** la denture (26) et la contre-denture (30) font, avec l'axe commun des dentures (66) un angle aigu (68), et **en ce que** la denture (26) et la contre-denture (30) sont arrondies (78) dans la zone de passage entre les flancs de dents se faisant face mutuellement (76) dans la position de dégagement et les têtes de dents (70).

3. Système selon l'une ou l'autre des revendications 1 ou 2, **caractérisé en ce que** le contre-élément (28), la tôle élastique (24) et le système d'actionnement (36) associé à la tôle élastique (24) sont montés sur un socle de siège (16).

4. Système selon la revendication 3, **caractérisé en ce que** la tôle élastique (24) est fixée sur le socle de siège par une portion de fixation (34).

5. Système selon la revendication 3, **caractérisé en ce que** le contre-élément est fixé au socle de siège (16) ou en fait partie intégrante.

6. Système selon la revendication 1, **caractérisé en ce que** l'angle aigu (68) s'évase dans la direction de l'ouverture de la tôle élastique (42), de manière telle qu'il crée un auto-blocage dans la position de repos.
